# EUROPÄISCHE PATENTSCHRIFT

(11) **EP 0 783 100 B1**
(45) Veröffentlichungstag und Bekanntmachung des Hinweises auf die Patenterteilung: **27.03.2002**
(21) Anmeldenummer: 96119478.4
(22) Anmeldetag: 04.12.1996
(51) Int. Cl.: G01M 3/16

(54) **Einrichtung zur Langzeit-Tankmantel-Lecküberwachung**
Device for the long-term leak monitoring of container walls
Dispositif de surveillance à long terme de fuites des parois d'un récipient

(30) Priorität: 19.12.1995 DE 19547478; 12.01.1996 DE 19600970
(43) Veröffentlichungstag der Anmeldung: 09.07.1997
(73) Patentinhaber: Müller, Sepp, D-83620 Feldkirchen-Westerham (DE)
(72) Erfinder: Müller, Sepp, D-83620 Feldkirchen-Westerham (DE)
(74) Vertreter: Kruspig, Volkmar, Dipl.-Ing.

(56) Entgegenhaltungen:
- DE-A- 3 336 335
- DE-A- 3 937 638
- DE-A- 4 322 859
- DE-B- 1 264 736
- GB-A- 2 245 977
- PATENT ABSTRACTS OF JAPAN vol. 007, no. 253 (P-235), 10.November 1983 -& JP 58 135930 A (KOUYOU KENSETSU KOGYO KK;OTHERS: 01), 12.August 1983,

## Beschreibung

Die Erfindung betrifft eine Einrichtung zur Langzeit-Tankmantel-Lecküberachung, insbesondere für Flachtankbauwerke mit einem außenseitig des Tankmantels angeordneten Sensorkabel.

Aus der deutschen Offenlegungsschrift DE 43 22 859 A1, ist eine Einrichtung zur Langzeit-Lecküberwachung an doppelwandigen Gefäßsystemen, insbesondere doppelwandigen Tankböden bekannt.

Die dort gezeigte Einrichtung gestattet es, mit geringem Aufwand auch eine Vielzahl von doppelwandigen Tankböden zyklisch oder gleichzeitig hinsichtlich des Auftretens von Leckagen zu überwachen. Mittels der Einrichtung ist feststellbar, ob ein Leck im äußeren Boden oder im Zwischenboden aufgetreten ist, wobei die Leckgröße und der Leckort bestimmt werden kann. Hierfür wird dort vorgeschlagen, an der Innenseite eines äußeren Bodens eine Zwischenlage aufzubringen, welche zur Abstützung des inneren Teils eines Doppelbodens dient. In die Zwischenlage ist ein Sensorkabel mit veränderbarer Dielektrizitätskonstanten geschützt verlegt. In dem Falle, wo Flüssigkeit in den Überwachungsraum eintritt, verändert sich die Dielektrizitätskonstante des Sensorkabels, so daß mittels einer entsprechenden Auswerteeinrichtung das Vorhandensein einer Leckage bestimmt werden kann.

Durch das spezielle Sensorkabel kann sowohl ein Leck im Innenboden als auch ein Leck im Außenboden erkannt werden. Problematisch ist jedoch die Erkennung von Lecks, die sich im Außenmantel des Tanks befinden. Dort vorhandene Undichtigkeiten können nur optisch und erst ab einer gewissen Leckagemenge festgestellt werden.

Aus diesem Grunde wurde daher bereits, beispielsweise nach DE 39 37 638 A1 vorgeschlagen, Auffangwannen auszubilden, die gegebenenfalls einen Hohlraum aufweisen, um im Hohlraum einen Überwachungssensor anzuordnen. Die Auffangwannen bilden die Stützfläche für darauf befindliche Flachtankbauwerke, so daß möglicherweise auch im Außenmantel vorhandene Lecks und dort austretende Flüssigkeit ohne Umweltrisiken gesammelt und beseitigt werden können.

Probleme entstehen jedoch dann, wenn aufgrund hoher Flächenpressung und der Temperaturwechselbelastung Risse in der Wanne selbst entstehen. Vorhandene Risse können zwar durch die in den Hohlräumen vorgesehenen Sensoren beim Eindringen von Flüssigkeiten, z. B. umweltgefährdenden Chemikalien, erkannt werden, jedoch ist in diesem Falle der eigentliche Zweck der Auffangwanne nicht mehr gewährleistet.

Letztendlich ist es unter Berücksichtigung der Lehre nach DE 39 37 638 A1 nicht möglich, bereits vorhandene Tanklager ohne aufwendige Demontagearbeiten den Umweltschutzaspekten entsprechend nachzurüsten.

Um Behälter überwachen zu können, welche beispielsweise Kohlenwasserstoffe, insbesondere Benzin, aufweisen, wurde gemäß DE 33 36 335 A1 vorgeschlagen, an der Wandung des Behälters außen eine Sensorleitung anzuordnen. Die bekannte Sensorleitung weist eine kohlenwasserstofflösliche Abschirmung auf und ist mit einem Auswerteteil verbunden.

In dem Falle, wenn gemäß der bekannten Lösung ein Leck im Außenmantel auftritt, wird davon ausgegangen, daß ausströmende Flüssigkeit schwerkraftbedingt an der Außenwand herunterläuft und mit dem am Tank außen angeordneten Sensorkabel in Berührung kommt. Hierbei entstehen jedoch folgende Probleme.

Zu einen kann die aus dem Leck austretende Flüssigkeitsmenge nicht ohne weiteres aufgefangen werden und zum anderen besteht die Gefahr, daß bei größeren Lecks durch ein seitliches Austreten und Wegspritzen der im Behälter gelagerten Flüssigkeit das Sensorkabel nicht, nur unzureichend oder zu spät mit der Flüssigkeit in Kontakt kommt, so daß keine oder nur eine zeitlich verzögerte Signalisierung eines vorhandenen Lecks erfolgt.

Es ist daher Aufgabe der Erfindung, eine Einrichtung zur Langzeit-Tankmantel-Lecküberwachung anzugeben, die insbesondere für Flachtankbauwerke geeignet ist und mit deren Hilfe zum einen sichergestellt ist, daß im Falle eines auftretenden Lecks dieses nicht nur erkannt, sondern auch austretende Flüssigkeit bis zur Leckbeseitigung zurückgehalten wird und die die Betreiber von Tankanlagen in die Lage versetzt, bereits vorhandene Flachtankbauwerke ohne aufwendige Baumaßnahmen mit einem entsprechenden Überwachungssystem nachzurüsten.

Die Lösung der Aufgabe der Erfindung erfolgt mit einem Gegenstand gemäß den Merkmalen des Patentanspruches 1, wobei die Unteransprüche mindestens zweckmäßige Ausgestaltungen und Weiterbildungen umfassen.

Der Grundgedanke der Erfindung besteht nunmehr darin, einen höhenmäßig mindestens teilweise unterhalb des Bodens und seitlich vom Flachtankbauwerk angeordneten speziellen Auffangraum vorzusehen. Dieser Auffangraum kann beispielsweise als ringförmiges Rohr, das unterhalb des Bodens des Tanks und diesen umfangsmäßig umgebend befindlich ist, ausgebildet sein. Der Auffangraum steht mit einer speziellen, nachträglich am Flachtankbauwerk angebrachten Kragung in Verbindung. Die Kragung wiederum weist zum Auffangraum hin ein Gefälle auf. Die Kragung und das z. B. ringförmige Rohr bilden ein Auffangvolumen, das in der Lage ist, auch bei größeren Lecks bis zum Entleeren des Tanks und/oder dem Beseitigen des Lecks austretende, umweltgefährdende Flüssigkeiten zu sammeln.

Gemäß einem weiteren Grundgedanken der Erfindung ist die Kragung und der Auffangraum bzw. das ringförmige Rohr oder der Bord einer Rinne, die zusammen mit der Kragung den Auffangraum bilden, so vorgesehen, daß ein ausreichender Abstand vom Tankmantel gegeben ist.

Hierdurch wird erreicht, daß bei einem größeren Leck auch größere Mengen Flüssigkeiten, die seitwärts gerichtet austreten, aufgefangen und mit einem Sensorkabel in Berührung kommen können. Das Sensorkabel selbst ist im Bereich der Kragung oder im Bodenbereich des Auffangraumes, z. B. im Boden der Rinne oder des ringförmigen Rohres, angeordnet. Dadurch, daß das Sensorkabel flüssigkeitsselektiv ausgebildet ist, führt z. B. eindringendes Regenwasser nicht zum irrtümlichen Auslösen eines Leckagealarmes.

Erfindungsgemäß kann die Kragung und das ringförmige Rohr, die beide den Auffangraum bilden, nachträglich im unteren Bodenabschnitt, den Tankmantel umgebend angebracht werden, so daß sich ohne aufwendige Baumaßnahmen eine höhere Sicherheit gegen Umweltrisiken erzielen läßt.

Gemäß einem weiteren Grundgedanken der Erfindung wird in vorteilhafter Weise der gegebene höhenmäßige Unterschied zwischen Umgebungsniveau und der Fundamenthöhe, z. B. eines Ringfundamentes, auf welchem das Flachtankbauwerk steht, ausgenutzt. Der Höhenunterschied, der durch das Gefälle der Kragung ausgeglichen wird, bildet in Verbindung mit dem erwähnten Bord bzw. einer Rinne oder dem ringförmigen Rohr ein ausreichend großes Auffangvolumen.

Erfindungsgemäß wird darüber hinaus der Auffangraum mit einer absperrbaren Entwässerung versehen, so daß eingedrungenes Regenwasser abgeleitet werden kann. Die Absperrmöglichkeit der Entwässerung ist dabei vorteilhaft so ausgebildet, daß diese sich im Falle eines Leckagealarms selbsttätig schließt.

In dem Falle, wo erfindungsgemäß der Auffangraum durch Kragung und umlaufendes ringförmiges Rohr gebildet wird, ist letzteres mit in Längsrichtung ausgebildeten Einlaufschlitzen oder Bohrungen, die zur Kragung hin gerichtet sind, versehen. Hierdurch wird ein mindestens teilweise geschlossenes Volumen gebildet, wodurch die Gefahr von Verschmutzungen des Auffangraumes reduziert ist.

Es hat sich gezeigt, daß in besonders vorteilhafter Weise das ringförmig das Flachtankbauwerk umgebende Rohr oder der Bord bzw. die Rinne einen Durchmesser aufweisen, welcher im Bereich zwischen dem 1,5- und 2,5fachen des Durchmessers des Flachtankbauwerkes liegt. Die Wahl des durchmessermäßigen Unterschiedes hängt von der Tankhöhe und den maximalen Druckverhältnissen und hieraus resultierenden Austrittsrichtungen und Flüssigkeitsmengen ab, die z. B. bei Lecks auftreten, die sich an oder in fehlerhaften Schweißnähten ausbilden können.

Das verwendete Sensorkabel besitzt ein sich reversibel veränderbares Dielektrikum, wobei die Flüssigkeits- oder Feuchteeinwirkung, bezogen auf das Kabel durch Auswertung von Hochfrequenz-Impulsechos feststellbar ist. Zur Feststellung des mit dem Kabel in Verbindung gekommenen Stoffes bzw. Flüssigkeit sowie des Ortes wird das Sensorkabel mit Hochfrequenzenergie nach dem an sich bekannten Impuls-Echo-Verfahren beaufschlagt, wobei mittels einer nachgeschalteten Auswerteeinrichtung die reflektierten Meßdaten mit einem vorab aufgenommenen, gespeicherten Normalbild vergleichbar sind. Durch einen Vergleich der aktuellen, reflektierten Meßdaten mit dem Normalbild kann eine Leckageentwicklung beobachtet werden. In dem Falle, wo über einen längeren Zeitraum aktuelle Meßdaten gespeichert werden, ist auch dann, wenn zwischenzeitlich das Sensorkabel über einen größeren Bereich mit Leckageflüssigkeit in Kontakt gekommen ist, durch Auswertung der Speicherbilder feststellbar, an welcher Stelle, zeitlich betrachtet, ein erster Kontakt zwischen Leckageflüssigkeit und Sensorkabel auftrat. Hierdurch kann das Auffinden des Lecks wesentlich erleichtert werden.

Im übrigen können durch diese Verfahrensweise gleichzeitig mehrere Leckagen an unterschiedlichen Orten bestimmt werden.

Wie bereits kurz erwähnt, ist die erfindungsgemäße Einrichtung in einfacher Weise nachrüstbar, indem vorhandene Flachtankbauwerke mit der Kragung und den weiteren Mitteln zur Bildung eines Auffangraumes versehen werden. Hierdurch kann mit geringem Aufwand auf veränderte gesetzliche Bestimmungen, beispielsweise des Wasserhaushaltsgesetzes, reagiert werden. Es erhöht sich bei Anwendung der erfindungsgemäßen Einrichtung die Sicherheit bei der Lagerung von wassergefährdenden Flüssigkeiten und es ist ausgeschlossen, daß auch bei vorhandenem Leck austretende umweltgefährdende Stoffe zu einer Verunreinigung oder zu einer nachteiligen Veränderung von Gewässern oder des Grundwassers führen. Ein mittelbarer Vorteil der erfindungsgemäßen Einrichtung besteht darin, daß auf ansonsten notwendig werdende, großflächige Versiegelung von Standflächen von Flachtankbauwerken verzichtet werden kann, so daß der natürliche Rückfluß von Regenwasser gesichert ist.

Die Erfindung soll nachstehend anhand eines Ausführungsbeispieles und unter Zuhilfenahme einer Figur näher erläutert werden.

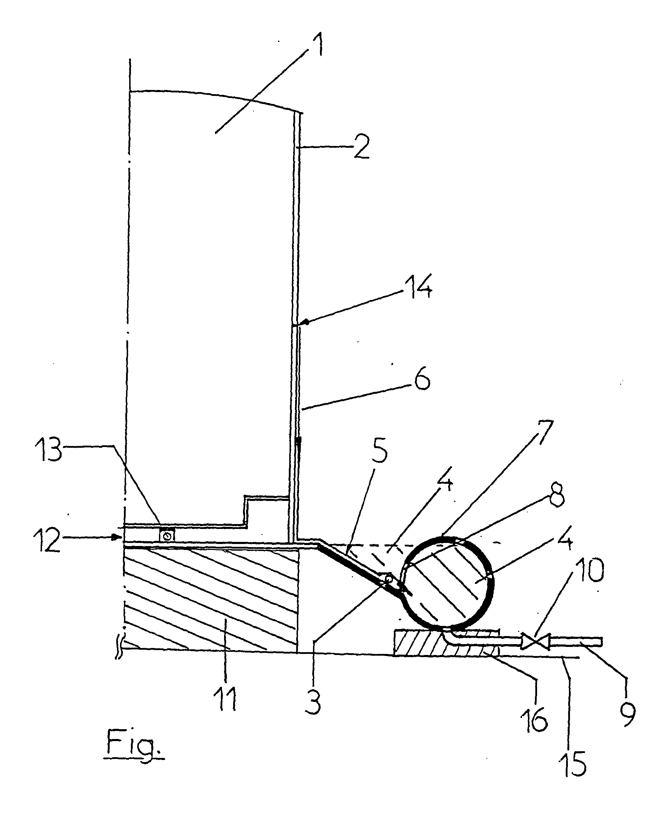

Die Figur zeigt hierbei eine prinzipielle Schnittdarstellung eines stehenden, im wesentlichen zylindrischen Tanks, der mit der Langzeit-Tankmantel-Lecküberwachung gemäß Ausführungsbeispiel versehen ist.

Das Flachtankbauwerk 1 befindet sich auf einem Ringfundament 11 und weist beispielsweise bereits einen Doppelboden 12 mit angeordneten Überwachungs-Flüssigkeitssensoren 13 auf.

Mit einer bekannten Überwachung des Doppelbodens ist sichergestellt, daß Tankbodenlecks erkannt und entsprechende Maßnahmen zum Außerbetriebnehmen und Reparieren des Flachtankbauwerkes 1 eingeleitet werden können.

Verbleibende Restrisiken bestehen jedoch darin, daß auch der Tankmantel 2 des Flachtankbauwerkes 1 bei längerem Betrieb Risse, d. h. Lecks aufweisen kann. Ein solches Leck 14 führt zu einem Leckagefluß 6 im wesentlichen aufgrund der Schwerkraft und Adhäsion nach unten gerichtet entlang dem Tankmantel 2. Bei größeren Lecks 14 besteht darüber hinaus die Gefahr, daß sich der Leckagefluß seitwärts gerichtet ohne am Tankmantel 2 nach unten fließend sich ausbildet.

Gemäß dem Ausführungsbeispiel ist am unteren Boden des Doppelbodens bzw. am unteren Ende des Flachtankbauwerkes 1 eine umlaufende Kragung 5 ausgebildet, die zum Umbebungsniveau 15 hin gerichtet ist.

Die Kragung selbst geht beim gezeigten Ausführungsbeispiel in ein ringförmiges Rohr 7 über, das längsgerichtete Einlaufschlitze oder Einlaufbohrungen 8 aufweist.

Das ringförmige Rohr 7 weist eine Entwässerung 9 mit einer Absperrung 10 auf. Das Rohr 7 selbst ist auf einem Fundament 16, das im wesentlichen in der Höhe des Umgebungsniveaus 15 liegt, abgestützt. Ein Sensorkabel 3 ist oberflächenseitig auf der Kragung 5 angeordnet oder befindet sich bei einem anderen Ausführungsbeispiel im Inneren des ringförmigen Rohres 7, insbesondere an dessen Innenunterseite.

Das beim gezeigten Ausführungsbeispiel einen Durchmesser von im wesentlichen 12 mm aufweisende Sensorkabel 3, das sich auf der Oberseite der Kragung 5 befindet, bildet einen vorgegebenen Anstauraum für den Leckagefluß 6, so daß eine sichere Signalgabe durch Veränderung der Dielektrizitätskonstanten des Sensorkabels 3 gegeben ist.

Das Sensorkabel 3 steht mit einer nicht gezeigten Impulsecho-Sende- und Auswerteeinrichtung in Verbindung. Mit Hilfe der Impulsecho-Auswerteeinrichtung wird das Entstehen und die Ausbildung eines Leckageflußkontaktes erkannt und ein Alarm ausgelöst. Spätestens zu diesem Zeitpunkt wird die Absperrung 10, die z. B. der Regenwasserentwässerung dient, geschlossen.

Wie anhand der Figur zu erkennen ist, bildet die Kragung 5 in Verbindung mit dem ringförmigen Rohr 7 einen Auffangraum 4 mit einem ausreichenden Volumen, so daß auch größere Mengen von Flüssigkeiten, die unerwünscht aus dem Tank austreten, bis zur Havariebeseitigung zurückgehalten werden können.

Der Abstand zwischen dem Tankmantel 2 und dem äußeren Ende der Kragung 5 bzw. einer offenen Rinne, die anstelle des ringförmigen Rohres 7 an die Kragung anschließend ausgebildet sein kann, ist so groß gewählt, daß auch seitwärts gerichtete Leckageflüsse sicher aufgefangen werden können. Insbesondere für diesen Fall ist es vorteilhaft, wenn das Sensorkabel 3 in der Nähe des Rinnenbodens oder beabstandet vom Tankmantel am entsprechenden Ende der Kragung 5 befestigt wird.

Es hat sich gezeigt, daß baulicherseits mit vertretbarem Aufwand ein Auffangraum 4 je zu überwachendem Flachtankbauwerk 1 ausgebildet werden kann, der ein Volumen von 3 bis 3,5 m³ aufweist, so daß auch bei größeren Leckageflußmengen genügend Zeit verbleibt, um havariebeseitigende Maßnahmen einzuleiten, ohne daß eine Grundwasser- oder Gewässergefährdung allgemein auftritt.

Gemäß einem nicht gezeigten Ausführungsbeispiel kann der Auffangraum durch eine Kragung gebildet werden, welche das notwendige Gefälle zum Höhenunterschied zwischen Ringfundament 11 und Umgebungsniveau 15 aufweist und die am Tankmantel entfernten Ende eine Rinne bildend, umgebördelt ist. Derartige Kragungen können segmentweise gefertigt und vorort am vorhandenen Flachtankbauwerk montiert und verschweißt oder verklebt werden.

Zur Gewährleistung einer Sicherheit gegen seitliches Austreten eines Leckageflusses hat sich eine Konstruktion bewährt, bei der der vom Rohr oder dem Bord bzw. der Rinne gebildete Ring, der das Flachtankbauwerk umgibt, einen Durchmesser aufweist, welcher im Bereich zwischen dem 1,5- und 2,5fachen des Durchmessers des Flachtankbauwerkes selbst liegt.

Alles in allem gelingt es, mit dem vorstehend beschriebenden Ausführungsbeispiel eine Einrichtung zu schaffen, mit deren Hilfe ohne Demontageaufwand eines Flachtankbauwerkes dieses so nachrüstbar ist, daß auf geänderte, insbesondere verschärfte wasserrechtliche Regelungen reagiert werden kann. Mit der Einrichtung ist ein Tankmantel-Überwachungssystem realisierbar, das aus Auffangrinne und Leckageerkennungseinrichtung besteht, die Sensorkabel, Punktsensoren und eine Auswerteeinheit umfaßt. Die beschriebene Einrichtung ist also bei bestehenden und neu zu errichtenden Flachtankbauwerken beliebiger Größe für wassergefährdende, nicht brennbare und wassergefährdende, brennbare Flüssigkeiten der VBS-Gefahrenklasse A1, A2, A3, B sowie der Wassergefährdungsklasse 0 bis 3 einsetzbar. In dem Falle, wo Leckagen im Tankmantel auftreten, fließt das austretende Medium überwiegend an der Tankwand entlang und wird in den Auffangraum bzw. in die beschriebene Auffangrinne geleitet und benetzt ein dort angeordnetes Sensorkabel. Das Sensorkabel reagiert selektiv auf Kohlenwasserstoffe und wird nicht von Regenwasser oder sonstiger Feuchtigkeit beeinträchtigt. Die Auffangrinne oder der Auffangraum wird ringförming um den Tank gelegt. Die Entwässerung des Auffangraumes erfolgt über Entwässerungsöffnungen, die als Ölabscheider ausgelegt sind oder zu einem separaten Ölabscheider führen. Der Auffangraum bildet ein Rückhaltevolumen, so daß auch größere Leckagemengen bis zur Beseitung des Lecks sicher gesammelt werden können.
¹ In the description (page 5 and page 9 of the source text) the diameter is specified as being between 1.5 and 2.5 times the diameter of the flat tank structure.

## Patentansprüche

1. Einrichtung zur Langzeit-Tankmantel-Lecküberachung, insbesondere für Flachtankbauwerke mit einem außenseitig des Tankmantels angeordneten Sensorkabel
**gekennzeichnet durch**
einen höhenmäßig mindestens teilweise unterhalb des Bodens (12) des Flachtankbauwerkes (1) angeordneten und diesen außenumfangsmäßig, vorzugsweise ringförmig umgebenden Auffangraum (4), welcher über eine ein Gefälle aufweisende Kragung (5) mit dem unteren Ende der Außenseite des Tankmantels (2) verbunden ist und eine Anordnung des Sensorkabels (3) auf der Kragung (5) oder im Bodenbereich des Auffangraumes (4).

2. Einrichtung nach Anspruch 1,
**dadurch gekennzeichnet,**
**daß** das Sensorkabel (3) kohlenwasserstoffselektiv ausgebildet ist.

3. Einrichtung nach Anspruch 1 oder 2,
**dadurch gekennzeichnet,**
**daß** der Auffangraum (4) ein das Flachtankbauwerk (1) ringförmig umgebendes Rohr (7) mit zur Kragung (5) weisenden Einlaufschlitzen oder Einlaufbohrungen (8) ist.

4. Einrichtung nach Anspruch 3,
**dadurch gekennzeichnet,**
**daß** das Auffangrohr (7) mindestens eine mit einer steuerbaren Absperrung (10) versehene Entwässerung (9) aufweist.

5. Einrichtung nach einem der vorangegangenen Ansprüche,
**dadurch gekennzeichnet,**
**daß** das Sensorkabel (3) am zum Auffangraum (4) weisenden Ende auf der Kragung (5) aufliegend und flüssigkeitsanstauend angeordnet ist.

6. Einrichtung nach einem der vorangegangenen Ansprüche,
**dadurch gekennzeichnet,**
**daß** das Gefälle der Kragung (5) den Höhenunterschied zwischen Tankboden (12) bzw. Tank- oder Ringfundament (11) und dem auf Umgebungsniveau (15) liegenden Teil des Auffangraumes (4) ausgleicht.

7. Einrichtung nach Anspruch 3,
**dadurch gekennzeichnet,**
**daß** die Einlaufschlitze (8) als Längsschlitze ausgebildet sind.

8. Einrichtung nach Anspruch 1 oder 2,
**dadurch gekennzeichnet,**
**daß** der das Flachtankbauwerk (1) umgebende Auffangraum (4) durch einen Bord oder eine Rinne, ausgehend vom tankfernen Ende der Kragung (5) gebildet wird.

9. Einrichtung nach Anspruch 8,
**dadurch gekennzeichnet,**
**daß** am Bord eine absperrbare Entwässerung angeordnet.

10. Einrichtung nach Anspruch 3 oder 8,
**dadurch gekennzeichnet,**
**daß** der vom Rohr oder dem Bord bzw. der Rinne gebildet Ring einen Durchmesser aufweist, welcher im Bereich zwischen dem 1,5- und 2fachen des Durchmessers des Flachtankbauwerkes (1) liegt.

11. Einrichtung nach einem der vorangegangenen Ansprüche,
**dadurch gekennzeichnet,**
**daß** das Sensorkabel (3) ein Koaxialkabel mit durch Flüssigkeitseinwirkung sich reversibel veränderndem Dielektrikum ist, wobei die Flüssigkeits- oder Feuchteeinwirkung durch Auswertung von Hochfrequenz-Impulsechos nachweisbar ist.

## Claims

1. A device for long-term leakage monitoring of tank casings, in particular for flat tank structures, comprising a sensor cable arranged on the exterior of the tank casing,
**characterised by**
a collection chamber (4) arranged, with respect to its height, at least partially below the base (12) of the flat tank structure (1) and surrounding its outer circumference preferably in an annular manner, which via a cantilever (5) having a gradient is connected to the lower end of the exterior of the tank casing (2), and an arrangement of the sensor cable (3) on the cantilever (5) or in the base region of the collection chamber (4).

2. A device according to claim 1,
**characterised in that**
the sensor cable (3) is made so as to be hydrocarbon-selective.

3. A device according to claim 1 or 2,
**characterised in that**
the collection chamber (4) is a pipe (7) surrounding the flat tank structure (1) in an annular manner, comprising inlet slots or inlet holes (8) directed towards the cantilever (5).

4. A device according to claim 3,
**characterised in that**
the collection pipe (7) comprises at least one drainage means (9) provided with a controllable shut-off means (10).

5. A device according to one of the previous claims,
**characterised in that**
the sensor cable (3) is arranged at the end of the cantilever (5) directed towards the collection chamber (4) so as to be supported thereon and liquid-retaining.

6. A device according to one of the previous claims,
**characterised in that**
the gradient of the cantilever (5) compensates the height difference between the tank base (12) or the tank- or circular foundation (11), and the portion of the collection chamber (4) located on the surrounding level (15).

7. A device according to claim 3,
**characterised in that**
the inlet slots (8) are formed as longitudinal slots.

8. A device according to claim 1 or 2,
**characterised in that**
the collection chamber (4) surrounding the flat tank structure (1) is formed by a rim or a trench starting from the end of the cantilever (5) remote from the tank.

9. A device according to claim 8,
**characterised in that**
a drainage means with shut-off capability is arranged on the rim.

10. A device according to claim 3 or 8,
**characterised in that**
the annulus formed by the pipe or the rim or trench has a diameter which is between 1.5 and 2 times¹ the diameter of the flat tank structure (1).

11. A device according to one of the previous claims,
**characterised in that**
the sensor cable (3) is a coaxial cable comprising a dielectric which changes reversibly as a result of the action of liquid, the action of liquid or moisture being detectable by means of the evaluation of high-frequency pulse echoes.

## Revendications

1. Dispositif de surveillance à long terme de fuites de la paroi d'un réservoir destiné, en particulier, à des constructions abritant un réservoir plat, équipé d'un câble de capteur disposé à l'extérieur de la paroi du réservoir,
**caractérisé par**
un espace collecteur (4) situé, en hauteur, au moins partiellement sous le fond (12) de la construction abritant un réservoir plat (1) et entourant, de préférence suivant une forme annulaire, la circonférence extérieure de celle-ci, espace qui est relié, par l'intermédiaire d'une console (5) présentant une déclivité, à l'extrémité inférieure de la face externe de la paroi du réservoir (2), et par la disposition du câble de capteur (3) sur la console (5) ou dans la zone du fond de l'espace collecteur (4).

2. Dispositif selon la revendication 1
**caractérisé en ce que**
le câble de capteur (3) est spécifique des hydrocarbures.

3. Dispositif selon la revendication 1 ou 2
**caractérisé en ce que**
l'espace collecteur (4) est un tuyau (7) entourant selon une forme annulaire la construction abritant un réservoir plat (1), présentant des fentes ou des perçages d'entrée (8) orientés en direction de la console (5).

4. Dispositif selon la revendication 3,
**caractérisé en ce que**
le tuyau collecteur (7) présente au moins une canalisation de drainage (9) pourvue d'une soupape d'arrêt (10) susceptible d'être commandée.

5. Dispositif selon l'une des revendications précédentes,
**caractérisé en ce que**
le câble de capteur (3) repose sur la console (5), à l'extrémité orientée vers l'espace collecteur (4), et est conçu pour retenir les liquides.

6. Dispositif selon l'une des revendications précédentes,
**caractérisé en ce que**
la déclivité de la console (5) compense la différence de hauteur entre le fond du réservoir (12) ou les fondations du réservoir (11) ou le fondement annulaire et la partie de l'espace collecteur (4) située au niveau du milieu environnant (15).

7. Dispositif selon la revendication 3,
**caractérisé en ce que** les fentes d'entrée (8) sont conformées en fentes longitudinales.

8. Dispositif selon la revendication 1 ou 2,
**caractérisé en ce que**
l'espace collecteur (4) qui entoure la construction abritant un réservoir plat (1) est constitué par un bord ou une rigole, qui part de l'extrémité de la console (5) qui est éloignée du réservoir.

9. Dispositif selon la revendication 8,
**caractérisé en ce qu'**
une canalisation de drainage susceptible d'être fermée est disposée sur le bord.

10. Dispositif selon la revendication 3 ou 8,
**caractérisé en ce que**
l'anneau qui est formé par le tuyau ou le bord ou la rigole présente un diamètre qui représente entre 1,5 et 2 fois le diamètre de la construction qui abrite un réservoir plat (1).

11. Dispositif selon l'une des revendications précédentes,
**caractérisé en ce que**
le câble de capteur (3) est un câble coaxial avec un diélectrique qui varie de façon réversible sous l'influence d'un liquide, l'influence d'un liquide ou de l'humidité étant susceptible d'être détectée grâce à l'évaluation d'échos d'impulsions haute fréquence.
